(19) Europäisches Patentamt
European Patent Office
Office européen des brevets

(11) **EP 3 677 349 B1**

## (12) EUROPÄISCHE PATENTSCHRIFT

(45) Veröffentlichungstag und Bekanntmachung des Hinweises auf die Patenterteilung:
**07.06.2023 Patentblatt 2023/23**

(21) Anmeldenummer: **19194423.0**

(22) Anmeldetag: **29.08.2019**

(51) Internationale Patentklassifikation (IPC):
**B07B 13/00** $^{(2006.01)}$ **B07B 13/05** $^{(2006.01)}$
**B07B 1/12** $^{(2006.01)}$

(52) Gemeinsame Patentklassifikation (CPC):
**B07B 13/003; B07B 1/12; B07B 13/05**

(54) **VERFAHREN UND VORRICHTUNG ZUR ABTRENNUNG VON LANGTEILEN**

METHOD AND DEVICE FOR SEPARATING LONG PARTS

PROCÉDÉ ET DISPOSITIF DE SÉPARATION DES PIÈCES LONGUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2018 CH 8372018**

(43) Veröffentlichungstag der Anmeldung:
**08.07.2020 Patentblatt 2020/28**

(73) Patentinhaber: **Ost - Ostschweizer Fachhochschule**
**8640 Rapperswil (CH)**

(72) Erfinder: **Bunge, Rainer**
**8849 Alpthal (CH)**

(74) Vertreter: **Piticco, Lorena**
**Isler & Pedrazzini AG**
**Giesshübelstrasse 45**
**Postfach 1772**
**8027 Zürich (CH)**

(56) Entgegenhaltungen:
EP-A1- 3 597 315    DE-A1- 19 601 224
DE-U1- 20 305 434   US-A- 2 302 532
US-B1- 6 241 097

EP 3 677 349 B1

## Beschreibung

### Technisches Gebiet

Die Erfindung fällt in das Gebiet der mechanischen Aufbereitungstechnik. Sie betrifft ein Verfahren und eine Vorrichtung nach den Oberbegriffen der entsprechenden unabhängigen Patentansprüche. Verfahren und Vorrichtung dienen zur Separation von länglichen Teilen (Langteilen) aus Schüttgütern.

### Stand der Technik

Durch eine konventionelle Absiebung wird Schüttgut im Wesentlichen nach dem kleinsten geometrischen Querschnitt getrennt. Hierdurch gelangen Langteile mit der minimalen Dimension, dem Durchmesser d, in die gleiche Korngrössenfraktion wie «kompakte» Teile vom Durchmesser d. Zum Beispiel schlüpfen längliche Holzstücke und Kabelrohre aus Kunststoff durch die Siebmaschen von Bauschuttaufbereitungsanlagen und gelangen so ins mineralische Recyclingprodukt. In diesem Fall stellen die überlangen Teile Störstoffe dar. Umgekehrt können Langteile auch Wertstoffe sein. Ein Beispiel hierfür sind längliche Edelstahlteile, z.B. Besteck, die durch eine konventionelle Aufbereitung von Müllverbrennungsaschen mittels Magnetscheidung und Wirbelstromscheidung maschinell nicht auf einfache mechanische Weise rückgewinnbar sind.

Der Stand der Technik in der Langteilentfernung aus Schüttgütern ist in den Patentklassen IPC B07B13 beschrieben. Bekannt ist der Einsatz von speziellen Sieben, z.B. Nasenlochsiebe oder 3D-Siebe. Diese sind so eingerichtet, dass längliche Teile über einen speziell strukturierten Siebbelag gefördert werden und als Grobgut ausgetragen werden, während Kompaktteile durch Passagen im Siebbelag hindurchfallen. Alternativ hierzu werden zur Abtrennung von länglichen Teilen, wie Fasern oder Drähtchen, vorwiegend horizontal schwingende Siebe eingesetzt, z.B. Taumelsiebe, wobei die länglichen Teile mit einem Durchmesser kleiner als die Maschenweite als Grobgut ausgeschieden werden. Weiterhin gibt es Langteilabscheider, bei denen die länglichen Teile auf Schwingförderern in Förderrichtung ausgerichtet werden, z.B. durch die Art der Vibration oder durch Stege und Riefen auf dem Belag des Schwingförderers, und dann über einen Spalt mit höhenversetzter Kante gefördert werden. Kurze und kompakte Teile fallen in den Spalt, während die länglichen Teile darüber hinweggleiten.

Unbefriedigend ist bei den beschriebenen Lösungsansätzen, dass sich Langteile in den Passagen für das Feinkorn, z.B. in den Siebmaschen oder Schlitzen, verklemmen können ("Klemmkorn"). Ein typisches Beispiel sind Nägel und Schrauben, die mit dem spitzen Ende in Sieböffnungen eintauchen, deren Kopfende aber zu breit ist, um diese Öffnungen zu passieren. Um solche Probleme zu umgehen werden Bürsten eingesetzt, welche längliche Teile seitlich von der Fördereinrichtung herunterkämmen. Nachteilig ist hierbei, dass die Separation nicht sehr selektiv ist und dass zusätzliche mechanische Einrichtungen, welche separat angetrieben werden müssen, zur Anwendung kommen.

Bekannt sind weiter schwingende Fördereinrichtungen, von denen das Schüttgut direkt auf einen Rechen fällt, so genannte Fingersiebe. Zur Abtrennung von Langteilen sind solche Vorrichtungen ungeeignet, weil längs der Förderrichtung ausgerichtete Langteile beim Abwurf von der Fördereinrichtung in den Rechen eintauchen und durch diesen hindurchfallen.

US 6 241 097 B1 offenbart eine Vorrichtung zum Aufteilen von Müll umfassend Stangenanordnungen und eine Ablenkplatte. Der Müll fällt zwischen den Stangen der Stangenanordnung hindurch, und wobei die Ablenkplatte dazu dient, jegliches Material derart abzulenken, dass es von der Stangenanordnung abprallt und zum Sammeln zurückfällt.

Aus der DE 203 05 434 U1 ist eine Vorrichtung zur Abscheidung von Langteilen bekannt, welche einen Trennkamm zur Abscheidung von Langteilen umfasst. Die Kammzungen des Trennkamms sind derart ausgebildet, dass Kleinteile unter den Kammzungen hindurch in einen ersten Materialstrom übergeleitet werden, während Langteile auf die Kammzungen auflaufen und somit in einen zweiten Materialstrom übergeleitet werden.

Die DE 196 01 224 A1 betrifft eine Austragvorrichtung umfassend eine Klappe mit einem Halterost, der in einer Schliessstellung der Klappe in ein Stangensieb eingreift. Dadurch wird grober Reststoff von der Klappe ferngehalten.

Die US 2 302 532 offenbart einen Separator umfassend einen Deflektor, welcher beim Ausstossende eines Förderbandes angeordnet ist. Der Deflektor dient dazu, Partikel nach unten in einen Behälter zu lenken.

### Darstellung der Erfindung

Der Erfindung liegt eine Aufgabe zugrunde, ein Verfahren und eine Vorrichtung zu schaffen, welche die Nachteile des Standes der Technik überwindet. Eine bevorzugte Aufgabe ist es, eine Vorrichtung und ein Verfahren anzugeben, die es erlauben, auf robuste mechanische Weise Langteile aus einem Schüttgut mit Korngrössenverteilung $d_{min} < d < d_{max}$ trennscharf zu entfernen. Der Durchmesser d eines Schüttgutpartikels wird als die kleinste lichte Weite eines Fingersiebes definiert, durch welches das Partikel gerade noch hindurchfällt.

Diese Aufgabe wird durch die Vorrichtung und das Verfahren, wie sie in den unabhängigen Patentansprüchen definiert sind, gelöst.

Gemäss Anspruch 1 umfasst ein Langteilabscheider für Schüttgut, das Langteile und Kompaktteile aufweist, eine Fördereinrichtung zur Förderung des Schüttgutes entlang einer Förderrichtung und einen Rechen, der in Förderrichtung der Fördereinrichtung gesehen hinter der Fördereinrichtung angeordnet ist. Das Schüttgut wird dabei dem Rechen zugeführt. Der Rechen weist eine Vielzahl von Zwischenräumen auf. Die Zwischenräume weisen in eine erste Richtung eine lichte Länge und in eine quer zur ersten Richtung liegenden zweiten Richtung eine lichte Weite auf. Die lichte Länge ist bei rechteckigen Zwischenräumen wenigstens doppelt so gross wie die lichte Weite. Der Langteilabscheider umfasst weiterhin eine zwischen der Fördereinrichtung und dem Rechen angeordnete Ablenkvorrichtung, welche dazu geeignet ist, die Langteile in einem Winkel von 45° bis 90° zur ersten Richtung quer zur lichten Länge der Zwischenräume auszurichten. Mit anderen Worten werden die Langteile durch die Ablenkvorrichtung vorzugsweise quer zur ersten Richtung orientiert.

Mit anderen Worten gesagt wird das Schüttgut auf der Fördereinrichtung transportiert und dann werden die Langteile mittels einer Ablenkvorrichtung quer zur Förderrichtung bzw. quer zur lichten Länge der Zwischenräume des Rechens ausgerichtet. Nach Passage der Ablenkvorrichtung werden die quer ausgerichteten Langteile auf den Rechen übergeben und können dann über die Rechenstege ins Grobgut abgleiten, wenn diese winklig geneigt sind und/oder durch Vibrationen zur Materialförderung angeregt werden. Kompaktteile fallen durch diesen Rechen hindurch und gelangen so ins Feingut. Hierdurch kann eine einfache Trennung der Schüttgutfraktion in Langteile und Kompaktteile erreicht werden, ohne dass es im Bereich des Rechens zu grösseren Verstopfungen kommt.

Vorzugsweise verläuft die erste Richtung, entlang welcher sich die Zwischenräume mit der lichten Länge erstrecken, parallel zur Förderrichtung. Hierdurch kann die Ausrichtung der Langteile auch als quer zur Förderrichtung definiert werden.

Mit den Ausdrucksweisen "lichte Länge" bzw. "lichte Weite" wird die Dimension des Zwischenraums bezüglich seines Spaltmasses oder Lichtmasses verstanden.

Die Zwischenräume des Rechens sind im Wesentlichen von der Form des Rechens abhängig. Bei einem Rechen mit parallel zueinander liegenden Stegen ist der Zwischenraum von oben auf den Rechen gesehen im Wesentlichen rechteckig. Die Rechenstege verlaufen vorzugsweise parallel zur Förderrichtung. Der Rechen kann aber auch anders ausgebildet sein, wobei der Zwischenraum beispielsweise dreieckig sein kann oder aber eine andere Form einnehmen kann.

Unter dem Ausdruck "Schüttgut" wird beispielsweise Verbrennungsschlacke, Bioabfall oder Bauschutt verstanden. Der Ausdruck "Langteil" definiert ein Teil, das in seiner Längenausdehnung typischerweise wesentlich grösser ist als in seiner Querausdehnung, also dem Durchmesser. Mit anderen Worten: die Langteile weisen einen Durchmesser auf, welcher kleiner ist als die Länge. Der maximale Durchmesser der Langteile ist vorzugsweise kleiner als die lichte Weite der Zwischenräume am Rechen. Vorzugsweise weisen die Langteile eine Länge auf, welche mindestens doppelt so gross ist wie die lichte Weite des Rechens. Unter dem Ausdruck "Kompaktteil" wird ein Teil verstanden bei welchem der Durchmesser und die Längenausdehnung im Wesentlichen gleich sind.

Vorzugsweise ist die Ablenkvorrichtung als Hindernis ausgebildet derart, dass längs zur Förderrichtung ausgerichtete Langteile im Wesentlichen stirnseitig auf die Ablenkvorrichtung treffen und durch das Auftreffen in die gewünschte Richtung gedreht werden. Die Fördereinrichtung dient als Antriebsmittel für das Orientieren der Langteile.

Die Ablenkvorrichtung kann verschiedenartig ausgebildet sein. Sie ist, wie bereits erwähnt, derart ausgebildet bzw. derart konfiguriert, dass die Langteile durch die Ablenkvorrichtung bezüglich der Zwischenräume des Rechens ausgerichtet werden.

In einer ersten Ausführungsform umfasst die Ablenkvorrichtung eine quer zur Förderrichtung angeordnete Platte. Dabei prallt das Schüttgut von der Fördereinrichtung her kommend auf die Platte und die Langteile werden durch die Platte derart ausgerichtet, dass die Langteile winklig geneigt bzw. quer zur ersten Richtung respektive zur lichten Länge des Rechens liegen.

Die Platte ist vorzugsweise stirnseitig zum Fördereinrichtung angeordnet und erstreckt sich bis unterhalb einer Ebene, welche durch die Förderoberfläche der Fördereinrichtung definiert wird.

Die Platte umfasst eine im Wesentlichen eben bzw. flach ausgebildete Prallfläche, auf welche das Schüttgut auftrifft. Die Prallfläche steht im Wesentlichen quer zur Förderrichtung bzw. quer zur ersten Richtung mit der lichten Länge.

In einer ersten Variante der ersten Ausführungsform ist die Platte bezüglich der Fördereinrichtung bewegbar, insbesondere schwenkbar oder pendelnd, angeordnet. Hierdurch ergeht der Vorteil, dass ein allfälliger Materialstau zwischen Abwurfkante der Fördereinrichtung und der Platte durch ein Bewegen der Platte einfach behoben werden kann. Insbesondere ist die Platte derart angeordnet, dass die Platte von der Fördereinrichtung weg schwenkbar ist, so dass der Spalt zwischen Platte und Fördereinrichtung grösser wird.

In einer zweiten Variante der ersten Ausführungsform ist die Platte bezüglich der Fördereinrichtung fest angeordnet. Diese Anordnung ist insbesondere dann vorteilhaft, wenn Materialstaus weitgehend ausgeschlossen werden können. Die fest angeordnete Platte kann in einer Weiterbildung mit einem Schwingungserreger gekoppelt sein, so dass die Platte in Schwingung kommt. Hierdurch kann ein allfälliger Materialstau behoben werden.

Vorzugsweise ist der Abstand zwischen Platte und dem stirnseitigen Ende der Fördereinrichtung kleiner als vier Mal die lichte Weite des Rechens. Das heisst in einer Formel ausgerückt:

Abstand zwischen Platte und stirnseitigem Ende der Fördereinrichtung < 4 x lichte Weite

Besonders bevorzugt ist der Abstand kleiner als zwei Mal die lichte Weite des Rechens ist. Das heisst in einer Formel ausgerückt:

Abstand zwischen Platte und stirnseitigem Ende der Fördereinrichtung < 2 x lichte Weite Die Wahl des Abstandes in den genannten Grössen erlaubt eine besonders gute Abscheidung der Langteile.

Das stirnseitige Ende der Fördereinrichtung ist das Ende der Fördereinrichtung, welches der Platte zugewandt ist.

In einer zweiten Ausführungsform umfasst die Ablenkvorrichtung eine Rutsche. Die Rutsche schliesst sich dem stirnseitigen Ende der Fördereinrichtung an. Vorzugsweise ist die Rutsche gewölbt oder konkav gerundet oder winklig zur Förderebene geneigt ausgebildet. Zwischen der Rutsche und den Schüttgutteilen entsteht beim Gleitvorgang vorzugsweise eine im Wesentlichen punktförmige Auflage, wobei dadurch die Langteile auf der Rutsche in die oben genannte Orientierung verschwenkt werden.

In einer dritten Ausführungsform umfasst die Ablenkvorrichtung die oben genannte Platte und die oben genannte Rutsche. Die Platte ist dabei beabstandet zur Rutsche angeordnet.

Nachfolgend werden vorteilhafte Weiterbildungen zu allen der obigen Ausführungsformen beschrieben.

Vorzugsweise ist der Rechen mit einem Schwingungserreger gekoppelt. Hierdurch lassen sich allfällige Materialstauungen auf dem Rechen leicht beheben.

Vorzugsweise ist zwischen der Ablenkvorrichtung und dem Rechen eine Prallplatte installiert. Durch die Prallplatte kann die Ausrichtung der Langteile weiter verbessert werden.

Vorzugsweise fördert die Fördereinrichtung vibrierend.

Auch ein erfindungsgemässes Verfahren wird beansprucht. Demgemäss dient ein Verfahren zur Abscheidung von Langteilen aus Schüttgut, insbesondere mit einem Langteilabscheider nach obiger Beschreibung. Das Schüttgut wird über eine Fördereinrichtung transportiert und von dieser auf einen Rechen übergeben. Der Rechen weist eine Vielzahl von Zwischenräumen auf, die in eine erste Richtung eine lichte Länge und die in eine quer zur ersten Richtung liegenden zweiten Richtung eine lichte Weite aufweisen. Die Langteile werden mittels einer zwischen der Fördereinrichtung und dem Rechen angeordneten Ablenkvorrichtung in einem Winkel von 45° bis 90° bzw. im Wesentlichen quer zur ersten Richtung, also quer zur lichten Länge der Zwischenräume ausgerichtet.

Durch dieses Verfahren können Langteile von den Kompaktteilen einfach und effizient abgeschieden werden.

Mit anderen Worten wird nach dem erfindungsgemässen Verfahren das Schüttgut auf der Fördereinrichtung transportiert. Langteile werden im Bereich des stirnseitigen Endes der Fördereinrichtung mittels einer Ablenkvorrichtung quer zur Förderrichtung ausgerichtet. Nach Passage der Ablenkvorrichtung werden die nunmehr quer ausgerichteten Langteile auf den Rechen übergeben und werden über dessen Stege als Grobgut ausgetragen. Kompaktteile mit Durchmesser kleiner als die lichte Weite fallen durch diesen Rechen hindurch und gelangen so ins Feingut.

Das Verfahren gemäss Erfindung und zwei beispielhafte Ausführungsformen der entsprechenden Vorrichtung werden anhand der Figuren im Detail beschrieben.

**Kurze Beschreibung der Zeichnungen**

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Figur 1     eine schematische Ansicht einer Vorrichtung nach einer ersten Ausführungsform von der Seite und von oben;

Figur 2     eine schematische Ansicht einer dreieckigen Ablenkvorrichtung

Figur 3     eine schematische Ansicht einer Fördereinrichtung mit Rutsche und einer Prallplatte

Figur 4     eine schematische Ansicht einer Fördereinrichtung, die als Sieb ausgebildet ist

Figur 5     eine schematische Ansicht eines dreistufigen Langteilabscheiders

Figur 6     eine schematische Ansicht einer Fördereinrichtung die als Förderband ausgebildet ist

Figur 7     eine schematische Ansicht eines Langteilabscheiders der in einer oberen Stufe nach dem Partikeldurchmesser trennt, und in einer darunter angeordneten Stufe nach der Partikellänge trennt.

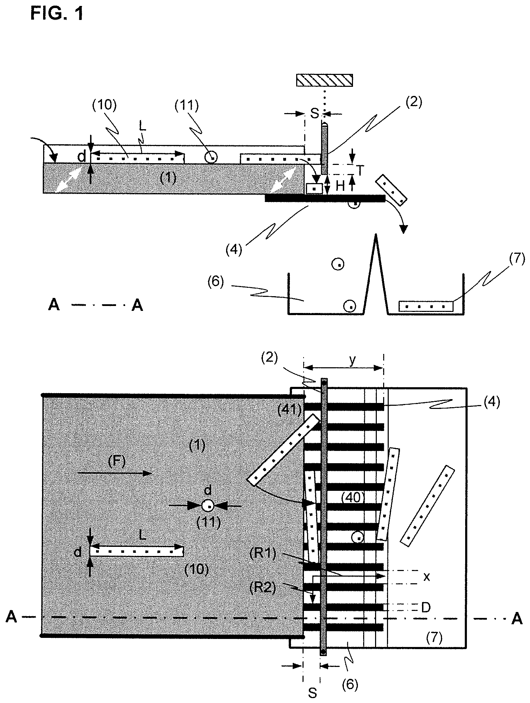

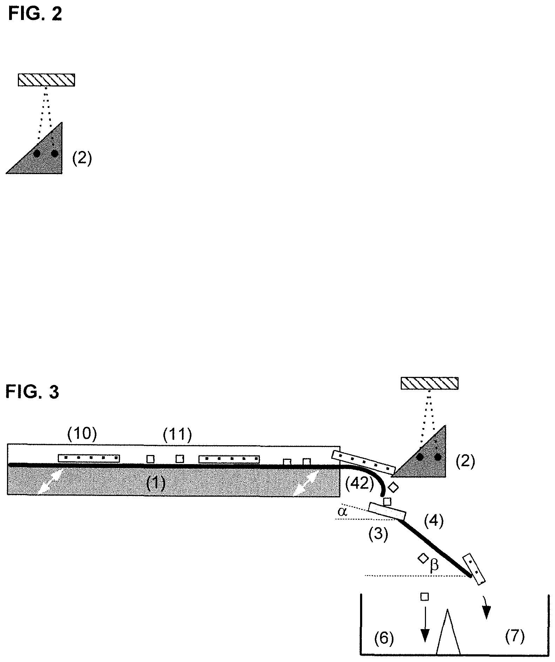

FIG. 1 zeigt eine erste beispielhafte Ausführungsform der erfindungsgemässen Vorrichtung zur Abtrennung von Langteilen mit Durchmesser d von Kompaktteilen, ebenfalls mit Durchmesser d aus einem Schüttgut mit Korngrössenverteilung $d_{min}<d<d_{max}$. Als Langteile (10) seien vorzugsweise solche Teile definiert, die eine Länge L>2d aufweisen. Teile mit vorzugsweise L<2d seien "Kompaktteile" (11). Das Schüttgut wird mittels der Fördereinrichtung (1) transportiert, welche bevorzugt linear schwingt, wobei sich Langteile (10) tendenziell in Förderrichtung ausrichten. Die Ablenkvorrichtung (2) ist in diesem Fall eine quer zur Förderrichtung hinter dem stirnseitigen Ende der Fördereinrichtung installierte Platte. Während Kompaktteile (11) über das stirnseitige Ende der Fördereinrichtung durch den Rechen (4) hindurch ins Feingut (6) fallen, stossen längs der Förderrichtung ausgerichtete Langteile an der Ablenkvorrichtung (2) an, und drehen sich quer zur Förderrichtung, bis sie über das stirnseitige Ende der Fördereinrichtung quer auf den Rechen (4) fallen, quer über dessen Stege hinweggleiten, und so ins Grobgut (7) abgeworfen werden. Die in FIG. 1 skizzierte Ablenkvorrichtung (2) ist in der Regel eine Stahlplatte, die z.B. stirnseitig mit einem Verschleissschutz versehen ist (z.B. einer Gummierung). Die Ablenkvorrichtung kann in verschiedener Weise modifiziert werden, z.B. durch ein dreieckiges Design wie in FIG. 2 dargestellt. Hierdurch werden die Langteile stirnseitig etwas angehoben und stellen sich daher leichter quer. Vorzugsweise ist die in FIG. 1 skizzierte Ablenkvorrichtung so installiert, dass sie bei einem eventuellen Materialstau ausweichen kann (z.B. pendelnd aufgehängt wie in FIG.1 skizziert). Wenn die Fördereinrichtung sehr breit ist, wird die Ablenkvorrichtung mit Vorteil in Form einzelner nebeneinander angeordneter Segmente ausgelegt. Zur Unterstützung der Ablenkung kann die Stirnseite der in FIG. 1 skizzierten Ablenkvorrichtung auch ein "Wellblech" oder "Zickzack" Design aufweisen (bei Betrachtung von oben). Typische Abmessungen dieser Ausführungsform der erfindungsgemässen Vorrichtung sind:

- $$d_{min} < d < d_{max} < x < L/2$$

- $$D = 0.2x \ldots 2x$$

- $$S = x \ldots 2.5x$$

- $$H = 1.5x \ldots 2.5x$$

- $$T = 0.5x \ldots x$$

Hierbei ist x die lichte Weite des Rechens. Versuche haben gezeigt, dass bei typischen Abmessungen gute Trennergebnisse für Partikel mit Länge L>3x zu erwarten sind und sehr gute Ergebnisse für Partikel mit L>5x.

FIG. 3 zeigt eine zweite beispielhafte Ausführungsform der erfindungsgemässen Vorrichtung. Als Fördereinrichtung (1) kommen vor allem Schwingförderer in Betracht, aber z.B. auch Schwingsiebe. In der in Fig. 3 dargestellten Ausführungsform ist der Abwurfbereich der Fördereinrichtung als gewölbte Rutsche (42) ausgebildet, sodass eine idealerweise punktförmige Kontaktfläche zwischen den Langteilen (10) und der Rutsche entsteht, welche das Querstellen der Langteile durch die Ablenkvorrichtung (2) begünstigt. Die Rutsche ist vorzugsweise in Form eines Viertel Kreisbogenabschnittes mit dem Radius R gewölbt. Es hat sich als besonders günstig erwiesen den Radius R in Anhängigkeit von der Länge L der abzuscheidenden Langteile folgendermassen zu wählen: L/2<R<2L. Auf der Rutsche drehen sich stirnseitig an der Ablenkvorrichtung anstossende Langteile um den Kontaktpunkt mit der Rutsche und rutschen dann quer zur Förderrichtung ab. Versuche haben gezeigt, dass es vorteilhaft ist, nach dem Abwurf eine Prallplatte (3) vorzusehen, welche verhindert, dass kurze, noch nicht vollständig quer ausgerichtete, Langteile kopfüber in den Rechen eintauchen und zwischen den Stegen des Rechens hindurchrutschen. Die Prallplatte (3) ist in einem spitzen Winkel zur Horizontalen installiert, vorzugsweise in einem Winkel $\alpha$ <30°. Noch nicht vollständig quer zur Förderrichtung ausgerichtete Langteile prallen hier mit dem Kopfende auf, werden verlangsamt und drehen sich durch Abrutschen des hinteren Endes auf der gewölbten Rutsche vollständig quer zur Förderrichtung und werden so auf den Rechen übergeben. Der Rechen (4) ist, sofern stationär (wie in FIG. 3 dargestellt) in einem Winkel $\beta$ von vorzugsweise 45°...70° installiert. In FIG. 3 ist die Fördereinrichtung (1) getrennt von der Prallplatte (3) und dem Rechen (4). Es kann auch sinnvoll sein diese drei Elemente miteinander zu verbinden. Dies vor allem dann, wenn die Fördereinrichtung ein Schwingförderer ist und die Vibrationen auch zur Förderung des Materials über die Prallplatte und den Rechen dienen. In diesen Fällen lassen sich die Winkel $\alpha$ und $\beta$ relativ spitz auslegen. Schwingt der Rechen linear, so kann er sogar geringfügig ansteigend fördern, wobei $\beta$ negativ wird.

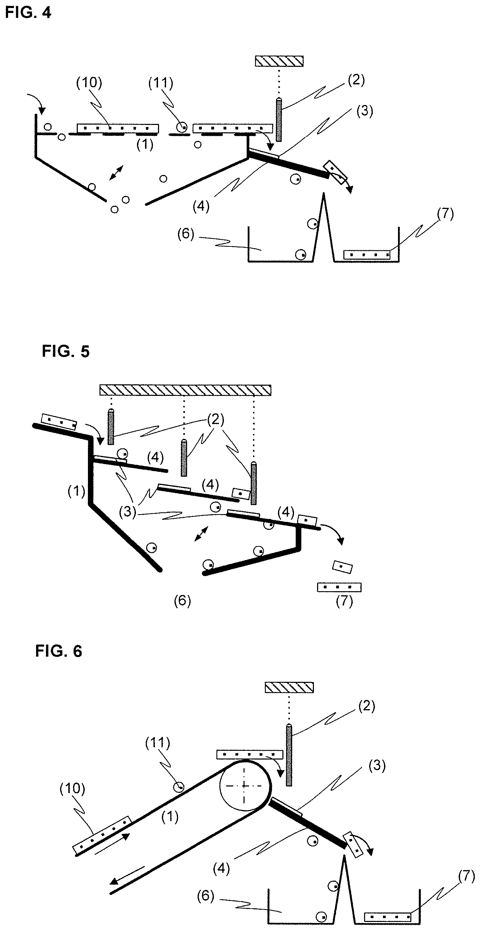

Die erfindungsgemässe Vorrichtung kann, wie in FIG. 4 skizziert, direkt an einer Siebmaschine montiert werden, auch an einer Siebmaschine mit mehreren Decks. Besonders einfach ist der Umbau einer konventionellen Finger- oder Stangensiebmaschine ("Sizer"), bei der die Siebelemente bereits als Rechen ausgebildet sind. Solche Siebmaschinen weisen häufig mehrere Stufen zur Umwälzung des Materials auf, und könnten daher auf einfache Weise zur Ausführung der Erfindung mit einer Ablenkvorrichtung (2) wie in FIG. 1 skizziert und, nach Bedarf, zusätzlich noch mit einer Prallplatte (3) nachgerüstet werden (FIG. 5). Die Fördereinrichtung kann auch ein Förderband sein (FIG. 6), das mit der in FIG. 1 dargestellten Ablenkvorrichtung (2) kombiniert ist.

Unsere Versuche haben gezeigt, dass man zwar auch einen stationären Rechen benutzen kann, über den die Langteile der Schwerkraft folgend gleiten, wie in FIG. 3 dargestellt. Es hat sich allerdings als vorteilhaft erwiesen, wenn der Rechen die Langteile aktiv fördert, z.B. schwingend. Er wird daher mit Vorteil als Einheit mit der Fördereinrichtung kombiniert, sofern diese selbst schwingt (z.B. ein Schwingförderer).

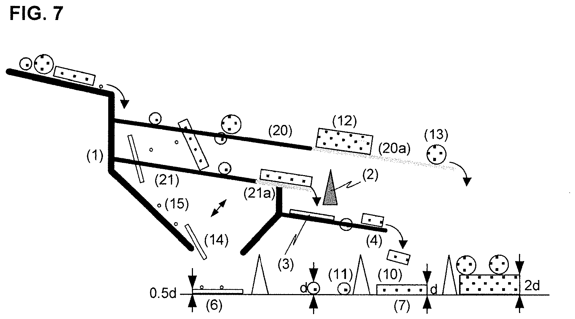

Zur Durchführung des erfindungsgemässen Verfahrens ist es vorteilhaft das Schüttgut zunächst so nach der Korngrösse zu klassieren, dass alle Teile, also sowohl die Langteile (10) als auch die Kompaktteile (11) einen maximalen Durchmesser $d_{max}$ haben, der kleiner ist als die lichte Weite x des Rechens (4). Um dies verstopfungsfrei zu bewerkstelligen, wird das Schüttgut zunächst z.B. auf einem konventionellen Fingersieb mit lichter Weite x abgesiebt, wobei sowohl die Langteile (10) mit Durchmesser d als auch die Kompaktteile (11) mit Durchmesser d ins Feingut geraten. Dieses Feingut wird dann mittels der erfindungsgemässen Vorrichtung bei der lichten Weite x des Rechens (4) so aufgetrennt, dass die Langteile (10) im Grobgut ausgetragen werden und Kompaktteile (11) im Feingut. Vorteilhaft wird dieses Vorgehen in dem in FIG. 7 skizzierten Kombigerät (1) umgesetzt. Dieses besteht aus folgenden Elementen: einem Grobrost (20) (z.B. einem Fingersieb oder Stangensizer) mit lichter Weite x=1.7d, einer Grobrostrutsche (20a), einem Feinrost (21) mit lichter Weite x*=0.7d (z.B. einem Fingersieb oder Stangensizer), einer Feinsiebrutsche (21a), einer Ablenkvorrichtung (2), einer Prallplatte (3), und einem Rechen (4) mit lichter Weite x=1.7d. Teile (14) (15) mit Korngrösse <0.7d fallen, ungeachtet ihrer Länge, durch den Grobrost mit lichter Weite x und durch den Feinrost mit lichter Weite x* hindurch. Teile (12) (13) mit Korngrösse >1.7d werden, ungeachtet ihrer Länge, über die Grobrostrutsche (20a) im Grobgut des Grobrostes ausgetragen. Teile mit einer Korngrösse zwischen 0.7d und 1.7d (10) (11) fallen durch den Grobrost hindurch, wandern dann über den Feinrost und gelangen über die Feinrostrutsche (21a) und die Ablenkvorrichtung (2) auf den Rechen (4). Dort werden sie entsprechend ihrer Länge getrennt.

Die Stege des Rechens (4) sind vorzugsweise parallelen Stangen mit kreisförmigem oder dreieckigem Querschnitt. Es können allerdings auch andere, z.B. keilförmige, sich in Förderrichtung verjüngende Stege zum Einsatz kommen, oder auch solche, die oben abgeflacht sind. Unsere Versuche haben die aus theoretischen Überlegungen abgeleitete Faustregel bestätigt, dass für eine gute Abscheidung von Kompaktteilen (11) mit Durchmesser d die Langteile (10) folgenden Bedingungen genügen müssen:

- $d<x$

- $L>2(x+D)$

wobei d der Durchmesser der Langteile und L deren Länge, x die lichte Weite des Rechens, und D die Breite der Stege des Rechens. Bei Zwischenräumen (40) die von oben gesehen nicht rechteckig sind (sondern z.B. keilförmig), also ein variables Spaltmass aufweisen, ist die lichte Weite (x) das grösste Spaltmass, also der grösste Abstand, zwischen benachbarten Stegen.

## Bezugszeichenliste

| 1 | Fördereinrichtung |
| 2 | Ablenkvorrichtung |
| 3 | Prallplatte |
| 4 | Rechen |
| 6 | Feingut |
| 7 | Grobgut |
| 10 | Langteile |

| 11 | Kompaktteile |
| 10, 11 | Schüttgut |
| 20 | Grobrost |
| 20a | Grobrostrutsche |
| 21 | Feinrost |
| 21a | Feinrostrutsche |
| 40 | Zwischenräume Rechenstege |
| 41 | stirnseitiges Ende der Fördereinrichtung |
| 42 | Rutsche |
| D | Durchmesser Rechenstege |
| d | Durchmesser Schüttgutpartikel |
| L | Länge |
| F | Förderrichtung |
| R1 | erste Richtung |
| R2 | zweite Richtung |
| S | horizontaler Abstand zwischen dem stirnseitigem Ende der Fördereinrichtung und der Ablenkvorrichtung |
| T | vertikaler Abstand zwischen der Unterkante Ablenkvorrichtung und dem stirnseitigen Ende der Fördereinrichtung |
| H | vertikaler Abstand zwischen Unterkante Ablenkvorrichtung und Rechen respektive Prallplatte (sofern vorhanden) |
| x | lichte Weite (Spaltmass) der Zwischenräume des Rechens |
| y | lichte Länge der Zwischenräume des Rechens |

## Patentansprüche

1. **Langteilabscheider** für Langteile (10) und Kompaktteile (11) aufweisendes Schüttgut (10, 11) umfassend

   eine Fördereinrichtung (1) zur Förderung des Schüttgutes (10, 11) entlang einer Förderrichtung (F) und
   einen Rechen (4), der in Förderrichtung (F) der Fördereinrichtung (1) gesehen hinter der Fördereinrichtung (1) angeordnet ist,
   wobei der Rechen (4) eine Vielzahl von Zwischenräumen (40) aufweist, die in eine erste Richtung (R1) eine lichte Länge (y) und die in eine quer zur ersten Richtung (R1) liegenden zweiten Richtung (R2) eine lichte Weite (x) aufweisen,
   **dadurch gekennzeichnet, dass** der Langteilabscheider weiterhin eine zwischen der Fördereinrichtung (1) und dem Rechen (4) angeordnete Ablenkvorrichtung (2) umfasst, welche dazu geeignet ist, die Langteile (10) in einem Winkel von 45° bis 90° zur ersten Richtung (R1) bzw. zur lichten Länge (y) der Zwischenräume (40) auszurichten.

2. Langteilabscheider nach Anspruch 1, **dadurch gekennzeichnet, dass** die erste Richtung (R1) entlang welcher sich die Zwischenräume (40) mit der lichten Länge (y) erstrecken parallel zur Förderrichtung (F) verläuft.

3. Langteilabscheider nach Anspruch 1 oder 2, **dadurch gekennzeichnet, dass** die Ablenkvorrichtung (2) für die Langteile als Hindernis ausgebildet ist, derart dass längs zur Förderrichtung (F) ausgerichtete Langteile (10) im Wesentlichen stirnseitig auf die Ablenkvorrichtung (2) treffen.

4. Langteilabscheider nach einem der vorhergehenden Ansprüche, **gekennzeichnet dadurch, dass** die Ablenkvorrichtung (2) eine quer zur Förderrichtung (F) angeordnete Platte umfasst, wobei die Platte bezüglich der Fördereinrichtung (1) bewegbar, insbesondere verschwenkbar oder pendelnd, angeordnet ist; oder wobei die Platte bezüglich der Fördereinrichtung (1) fest angeordnet ist.

5. Langteilabscheider nach Anspruch 4, **gekennzeichnet dadurch, dass** der horizontale Abstand (S) zwischen Platte und dem stirnseitigen Ende (41) der Fördereinrichtung (1) kleiner als vier Mal die lichte Weite (x) des Rechens (4), vorzugsweise kleiner als zwei Mal die lichte Weite (x) des Rechens (4), ist.

6. Langteilabscheider nach einem der Ansprüche 1 bis 5, **gekennzeichnet dadurch, dass** die Ablenkvorrichtung (2) eine Rutsche (42) umfasst, wobei die Rutsche (42) sich dem stirnseitigen Ende (41) der Fördereinrichtung (1) anschliesst und wobei die Rutsche (42) vorzugsweise gewölbt oder konkav gerundet oder zur Förderoberfläche der Fördereinrichtung winklig geneigt ausgebildet ist.

7. Langteilabscheider nach einem der Ansprüche 1 bis 6, **gekennzeichnet dadurch, dass** der Rechen (4) mit einem Schwingungserreger gekoppelt ist.

8. Langteilabscheider nach einem der Ansprüche 1 bis 7, **gekennzeichnet dadurch, dass** zwischen der Ablenkvorrichtung (2) und dem Rechen (4) eine Prallplatte (3) installiert ist.

9. Langteilabscheider nach einem der Ansprüche 1 bis 8, **gekennzeichnet dadurch, dass** die Fördereinrichtung (1) derart ausgebildet ist, dass sie vibrierend fördert.

10. **Verfahren** zur Abscheidung von Langteilen (10) aus Schüttgut, insbesondere mit einem Langteilabscheider nach einem der vorhergehenden Ansprüche, wobei das Schüttgut über eine Fördereinrichtung (1) transportiert wird und von dieser auf einen Rechen (4) übergeben wird, wobei der Rechen (4) eine Vielzahl von Zwischenräumen (40) aufweist, die in eine erste Richtung (R1) eine lichte Länge (y) und die in einer quer zur ersten Richtung (R1) liegenden zweiten Richtung (R2) eine lichte Weite (x) aufweisen, **gekennzeichnet dadurch, dass** die Langteile mittels einer zwischen der Fördereinrichtung (1) und dem Rechen (4) angeordnete Ablenkvorrichtung (2) in einem Winkel von 45° bis 90° zur ersten Richtung (R1) mit der lichten Länge (y) der Zwischenräume (40) ausgerichtet werden.

11. Verfahren nach Anspruch 10, **gekennzeichnet dadurch, dass** die abzuscheidenden Langteile (10) einen Durchmesser (d) aufweisen, der kleiner ist als die lichte Weite (x) des Rechens (4).

12. Verfahren nach einem der Ansprüche 10 bis 11, **gekennzeichnet dadurch, dass** die abzuscheidenden Langteile (10) eine Länge (L) aufweisen, die grösser ist als die zweifache lichte Weite (x) des Zwischenraums (40) des Rechens (4).

13. Verfahren nach einem der Ansprüche 10 bis 12 **gekennzeichnet dadurch, dass** das Schüttgut vor der Aufgabe auf die Fördereinrichtung (1) bereits so klassiert wurde, dass der Durchmesser (d) der Langteile (10) kleiner ist als die lichte Weite (x) des Rechens (4).

**Claims**

1. A long part separator for bulk material (10, 11) having long parts (10) and compact parts (11) comprising

   a conveying device (1) for conveying the bulk material (10, 11) along a conveying direction (F) and
   a rake (4), which is situated behind the conveying device (1) when seen along the conveying direction (F) of the conveying device (1),
   wherein the rake (4) comprises a plurality of interspaces (40), having in a first direction (R1) a clear length (y) and in a second direction (R2) lying transversely to the first direction (R1) a clear width (x),
   **characterised in that** the long part separator furthermore comprises a deflecting device (2) arranged between the conveying device (1) and the rake (4), which is suitable for orienting the long parts (10) at an angle of 45° to 90° to the first direction (R1) or to the clear length (y) of the interspaces (40).

2. The long part separator according to claim 1, **characterized in that** the first direction (R1) along which the interspaces (40) extend by the clear length (y) runs parallel to the conveying direction (F).

3. The long part separator according to claim 1 or 2,

characterized in that the deflecting device (2) is designed as an obstacle for the long parts, such that long parts (10) oriented longitudinally to the conveying direction (F) strike against the deflecting device (2) substantially at the front end.

4. The long part separator according to one of the preceding claims, **characterized in that** the deflecting device (2) comprises a plate arranged transversely to the conveying direction (F), wherein the plate is arranged movably relative to the conveying device (1), in particular in a swivelling or swinging manner; or wherein the plate is arranged firmly relative to the conveying device (1).

5. The long part separator according to claim 4, **characterized in that** the horizontal distance (S) between the plate and the front end (41) of the conveying device (1) is smaller than four times the clear width (x) of the rake (4), preferably smaller than twice the clear width (x) of the rake (4).

6. The long part separator according to one of claims 1 to 5, **characterized in that** the deflecting device (2) comprises a chute (42), wherein the chute (42) is adjacent to the front end (41) of the conveying device (1) and wherein the chute (42) is preferably curved or concavely rounded or inclined at an angle to the conveying surface of the conveying device.

7. The long part separator according to one of claims 1 to 6, **characterized in that** the rake (4) is coupled to a vibration exciter.

8. The long part separator according to one of claims 1 to 7, **characterized in that** a baffle plate (3) is installed between the deflecting device (2) and the rake (4).

9. The long part separator according to one of claims 1 to 8, **characterized in that** the conveying device (1) is configured in such a way that is conveys vibratingly.

10. A method for separating long parts (10) from bulk material, especially with a long part separator according to one of the preceding claims, wherein the bulk material is conveyed via a conveying device (1) and transferred from this to a rake (4), wherein the rake (4) comprises a plurality of interspaces (40), having in a first direction (R1) a clear length (y) and in a second direction (R2) lying transversely to the first direction (R1) a clear width (x), **characterized in that** the long parts are oriented at an angle of 45° to 90° to the first direction (R1) with the clear length (y) of the interspaces (40) by a deflecting device (2) situated between the conveying device (1) and the rake (4).

11. The method according to claim 10, **characterized in that** the long parts (10) to be separated have a diameter (d) which is smaller than the clear width (x) of the rake (4).

12. The method according to one of claims 10 to 11, **characterized in that** the long parts (10) to be separated have a length (L) which is greater than twice the clear width (x) of the interspace (40) of the rake (4).

13. The method according to one of claims 10 to 12, **characterized in that** the bulk material has already been classified before being placed on the conveying device (1) such that the diameter (d) of the long parts (10) is less than the clear width (x) of the rake (4).

**Revendications**

1. Séparateur de pièces longues pour matériau en vrac (10,11) comprenant des pièces longues (10) et des pièces compactes (11) comportant

    un dispositif de transport (1) pour transporter le matériau en vrac (10, 11) le long d'une direction de transport (F) et
    un râteau (4) qui est disposé derrière le dispositif de transport (1), vu dans la direction de transport (F) du dispositif de transport (1),
    dans lequel le râteau (4) a une pluralité d'espaces intermédiaires (40) qui ont une longueur libre (y) dans une première direction (R1) et ont une largeur libre (x) dans une seconde direction (R2) perpendiculaire à la première direction (R1),
    **caractérisé en ce que** le séparateur de pièces longues comprend en outre un dispositif de déviation (2) disposé entre le dispositif de transport (1) et le râteau (4), qui est apte à aligner les pièces longues (10) selon un angle de 45° à 90° par rapport à la première direction (R1) respectivement de les aligner à la longueur libre (y) des espaces intermédiaires (40).

2. Séparateur de pièces longues selon la revendication 1, **caractérisé en ce que** la première direction (R1) le long de laquelle s'étendent les espaces intermédiaires (40) avec la longueur libre (y) est parallèle à la direction de transport (F).

3. Séparateur de pièces longues selon la revendication 1 ou 2, **caractérisé en ce que** le dispositif de déviation (2) pour les pièces longues est conçu comme un obstacle, de sorte que les pièces longues (10) alignées le long de la direction de transport (F) rencontrent le dispositif de déviation (2) essentiellement frontalement.

**4.** Séparateur de pièces longues selon l'une des revendications précédentes, **caractérisé en ce que** le dispositif de déviation (2) comprend une plaque disposée transversalement à la direction de transport (F), la plaque étant disposée de manière mobile, notamment de manière pivotante ou oscillante, par rapport au dispositif de transport (1); ou dans lequel la plaque est fixe par rapport au dispositif de transport (1).

**5.** Séparateur de pièces longues selon la revendication 4, **caractérisé en ce que** la distance horizontale (S) entre le plateau et l'extrémité frontale (41) du dispositif de transport (1) est inférieure à quatre fois la largeur libre (x) du râteau (4), de préférence moins de deux fois la largeur libre (x) du râteau (4).

**6.** Séparateur de pièces longues selon l'une des revendications 1 à 5, **caractérisé en ce que** le dispositif de déviation (2) comprend une goulotte (42), la goulotte (42) se raccordant à l'extrémité frontale (41) du dispositif de transport (1) et la goulotte (42) est de préférence arquée ou arrondie de manière concave ou incliné à un angle par rapport à la surface de transport du dispositif de transport.

**7.** Séparateur de pièces longues selon l'une des revendications 1 à 6, **caractérisé en ce que** le râteau (4) est couplé à un excitateur de vibrations.

**8.** Séparateur de pièces longues selon l'une des revendications 1 à 7, **caractérisé en ce qu'**entre le dispositif de déviation (2) et le râteau (4) une chicane (3) est installée.

**9.** Séparateur de pièces longues selon l'une des revendications 1 à 8, **caractérisé en ce que** le dispositif de transport (1) est conçu de façon à transporter de manière vibrante.

**10.** Procédé de séparation de pièces longues (10) d'un matériau en vrac, en particulier avec un séparateur de pièces longues selon l'une des revendications précédentes, dans lequel le matériau en vrac est transporté via un dispositif de transport (1) et est transféré de celui-ci à un râteau (4), le râteau (4) ayant une pluralité d'espaces intermédiaires (40) qui ont une longueur libre (y) dans une première direction (R1) et une largeur libre (x) dans une seconde direction (R2) s'étendant perpendiculairement à la première direction (R1), **caractérisé en ce que** les pièces longues sont alignées, au moyen d'un dispositif de déviation (2) disposé entre le dispositif de transport (1) et le râteau (4), selon un angle de 45° à 90° par rapport à la première direction (R1), moyennant la longueur libre (y) des espaces intermédiaires (40).

**11.** Procédé selon la revendication 10, **caractérisé en ce que** les pièces longues (10) à séparer ont un diamètre (d) inférieur à la largeur libre (x) du râteau (4).

**12.** Procédé selon l'une des revendications 10 à 11, **caractérisé en ce que** les pièces longues (10) à séparer ont une longueur (L) supérieure au double de la largeur libre (x) de l'espace intermédiaire (40) du râteau (4).

**13.** Procédé selon l'une des revendications 10 à 12, **caractérisé en ce que** la matière en vrac, avant sa mise en place sur le dispositif de transport (1), a préalablement été triée de telle sorte que le diamètre (d) des pièces longues (10) soit inférieur à la largeur libre (x) du râteau (4).

# FIG. 1

**FIG. 2**

(2)

**FIG. 3**

(10)     (11)

(1)     (42)

α

(3)     (4)

◇β

(6)     (7)

**FIG. 4**

**FIG. 5**

**FIG. 6**

## FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6241097 B1
- DE 20305434 U1
- DE 19601224 A1
- US 2302532 A